# EUROPEAN PATENT APPLICATION

(11) **EP 3 444 909 A1**
(43) Date of publication of application: **20.02.2019**
(21) Application number: 17806446.5
(22) Date of filing: 22.05.2017
(51) Int. Cl.: H01T 19/00, G01N 15/06, G01N 27/68, H01T 23/00, G01N 27/70

(54) **CHARGE GENERATION ELEMENT AND FINE PARTICLE NUMBER DETECTOR**

(30) Priority: 03.06.2016 JP 2016111718
(71) Applicant: NGK Insulators, Ltd., Nagoya-city, Aichi 467-8530 (JP)
(72) Inventor: MIZUNO, Kazuyuki, Nagoya-city Aichi 467-8530 (JP); OKUMURA, Hidemasa, Nagoya-city Aichi 467-8530 (JP); KANNO, Keiichi, Nagoya-city Aichi 467-8530 (JP)
(74) Representative: Müller-Boré & Partner Patentanwälte PartG mbB
(86) International application number: PCT/JP2017/019053
(87) International publication number: WO 2017/208889

(57) **Abstract**

An electric-charge generating element 20 is an element that generates electric charges by gaseous discharge. The electric-charge generating element 20 includes a dielectric layer 22, discharge electrodes 26 disposed on one surface of the dielectric layer 22, ground electrodes 30 disposed on the other surface of the dielectric layer 22, and a nozzle 24 that is disposed in the dielectric layer 22 at a position such that the nozzle 24 does not interfere with the discharge electrodes 26 and the ground electrodes 30 so as to penetrate through the dielectric layer 22. Electric charges generated by the discharge electrodes 26 of the electric-charge generating element 20 are released to the opposite side through the nozzle 24.

## Description

### Technical Field

The present invention relates to an electric-charge generating element and a particle counter.

### Background Art

Examples of known particle counters include, as described in PTL 1, a particle counter that adds electric charges to particles in a measurement target gas introduced into a casing, collects particles to which electric charges have been added, and measures the number of particles based on the quantity of electric charges of the collected particles. The particle counter adds electric charges to particles by using an electric-charge generating electrode having a sharply pointed needle shape. Because such a needle-shaped electric-charge generating electrode adds electric charges to particles by using a local electric field at the pointed end thereof, it is difficult to add electric charges to particles in a large area.

Examples of known electric-charge generating elements include, as described in PTL 2, an electric-charge generating element that includes a dielectric body, a discharge electrode that is disposed on a front surface of the dielectric body and that has very small protrusions, and a ground electrode that is disposed on a back surface of the dielectric body. The electric-charge generating element, which utilizes high-efficiency electric discharge using the dielectric body as a barrier layer, can generate the same quantity of electric charges with lower voltage and lower power consumption, compared with the needle-shaped electric-charge generating electrode.

### Citation List

### Patent Literature

PTL 1: WO 2015/146456 A1
PTL 2: JP 2008-4488 A

### Summary of Invention

### Technical Problem

If the electric-charge generating element described in PTL 2 is used, instead of the needle-shaped electric-charge generating electrode, in the particle counter described in PTL 1 when adding electric charges to particles, the same quantity of electric charges can be generated with lower voltage and lower power consumption. In this case, a nozzle that is independent from the electric-charge generating element may be disposed on the downstream side of the electric-charge generating element, and electric charges generated by the electric-charge generating element and particles to which the electric charges have been added may be released from the nozzle to the collection device. However, there is a problem in that, in the passage from the electric-charge generating element to the nozzle, electric charges generated by the electric-charge generating element and the particles to which the electric charges have been added may adhere to the inner wall of the passage and cannot be efficiently released to the collection device.

The present invention has been made to solve the above problem, and a main object thereof is to provide an electric-charge generating element that can efficiently release generated electric charges.

### Solution to Problem

An electric-charge generating element according to the present invention is
an electric-charge generating element that generates electric charges by gaseous discharge, including
a dielectric layer;
a discharge electrode disposed on one surface of the dielectric layer;
a ground electrode disposed on the other surface or inside of the dielectric layer; and
a nozzle that is disposed in the dielectric layer at a position such that the nozzle does not interfere with the discharge electrode and the ground electrode so as to penetrate through the dielectric layer.

The electric-charge generating element causes gaseous discharge by applying a high voltage between the ground electrode and the discharge electrode, and generates electric charges by the gaseous discharge. Electric charges are generated, for example, by ionizing air. Here, because high-efficiency discharge using the dielectric layer as a barrier layer is utilized, it is possible to generate the same quantity of electric charges with lower voltage and lower power consumption, compared with a needle-shaped electric-charge generating electrode. Moreover, electric charges generated by the discharge electrode are released toward the ground electrode through the nozzle disposed in the dielectric layer. If the nozzle is disposed independently from the electric-charge generating element, electric charges may adhere to a wall surface of a connection passage that connects the electric-charge generating element and the nozzle. However, with the present invention, because the nozzle is incorporated in the electric-charge generating element, the connection passage does not exist, and electric charges do not adhere to the wall surface. Accordingly, generated electric charges can be efficiently released.

In the present specification, the term "electric charges" includes positive electric charges, negative electric charges, and ions.

The electric-charge generating element according to the present invention may add the generated electric charges to particles included in a gas. For example, the electric-charge generating element may add electric charges to particles included in exhaust gas of an automobile.

In the electric-charge generating element according to the present invention, the dielectric layer may have the nozzle at a center of the dielectric layer. In this case, generated electric charges can be easily released from the nozzle.

In the electric-charge generating element according to the present invention, an opening shape of the nozzle may be a polygon, a circle, or an ellipse. The term "polygon" includes a quadrangle, a pentagon, and a hexagon. However, a quadrangle is preferable.

In the electric-charge generating element according to the present invention, the dielectric layer may have a cone shape or a pyramid shape, and the nozzle may be disposed at a vertex of the dielectric layer. The term "cone shape" includes a circular cone shape and an elliptical cone shape. The term "pyramid shape" includes polygonal pyramid shapes, such as a quadrangular pyramid shape. However, a quadrangular pyramid shape is preferable. When the dielectric layer has a cone shape, the outer shape of the dielectric layer is a circle or an ellipse. When the dielectric layer has a pyramid shape, the outer shape of the dielectric layer is a polygon. In such an electric-charge generating element, the outer shape of the dielectric layer may be the outer shape of the electric-charge generating element. Preferably, the outer shape of the electric-charge generating element matches the cross-sectional shape of the gas inlet side and the gas outlet side of the gas flow pipe. In this case, because the electric-charge generating element can be hermetically attached to the inside of the gas flow pipe, leakage of electric charges from a gap between the gas flow pipe and the electric-charge generating element can be prevented. In the electric-charge generating element, the discharge electrode may be disposed on an inner surface of the dielectric layer, and the ground electrode may be disposed on an outer surface or inside of the dielectric layer. In this case, because electric charges generated by the discharge electrode are guided by the dielectric layer having a cone shape or a pyramid shape, the electric charges are efficiently released from the nozzle toward the ground electrode.

In the electric-charge generating element according to the present invention, the discharge electrode and the ground electrode may be disposed so as to form a plurality of pairs and each may be arranged in a radial pattern or an annular pattern centered on the nozzle. In this case, because a large number of discharge electrodes and ground electrodes can be disposed on the dielectric layer, electric charges can be efficiently generated.

In the electric-charge generating element according to the present invention, the dielectric layer may have a vibration source that vibrates the dielectric layer. In this case, by vibrating the dielectric layer by using the vibration source, generated electric charges are prevented from adhering onto the dielectric layer. Moreover, occurrence of blocking of the nozzle can be prevented.

A particle counter according to the present invention includes the electric-charge generating element that is described above and that adds electric charges to particles in a gas introduced into a gas flow pipe; and a detection device that detects the number of particles in the gas based on the quantity of electric charges of particles to which electric charges have been added or the quantity of electric charges that have not been added to particles.

The particle counter adds electric charges to particles in the gas introduced into the gas flow pipe by utilizing the electric-charge generating element described above, and detects the number of particles in the gas based on the quantity of electrode of particles to which electric charges are added or the quantity of electric charges that are not added to the particles. The electric-charge generating element described above, which utilizes high-efficiency discharge using the dielectric layer as a barrier layer, can generate the same quantity of electric charges with lower voltage and lower power consumption, compared with a needle-shaped electric-charge generating electrode. Moreover, electric charges generated by the discharge electrode are released toward the downstream side in the gas flow direction through the nozzle disposed in the dielectric layer itself. If the nozzle is disposed independently from the electric-charge generating element, electric charges may adhere to a wall surface of a connection passage that connects the electric-charge generating element and the nozzle. However, with the present invention, because the nozzle is incorporated in the electric-charge generating element, the connection passage does not exist, and electric charges and particles to which electric charges have been added do not adhere to the wall surface. Accordingly, generated electric charges can be efficiently released. The phrase "detects the number of particles" includes not only a case of measuring the number of particles but also a case of determining whether the number of particles is within a predetermined range (for example, whether the number exceeds a predetermined threshold).

### Brief Description of Drawings

Fig. 1 is a schematic sectional view of a particle counter 10.
Fig. 2 is a plan view of an electric-charge generating element 20.
Fig. 3 is a sectional view taken along line A-A of Fig. 2 .
Fig. 4 is a rear view of the electric-charge generating element 20.
Fig. 5 is a sectional view of an electric-charge generating element 120.
Fig. 6 is a plan view of an electric-charge generating element 220.

### Description of Embodiments

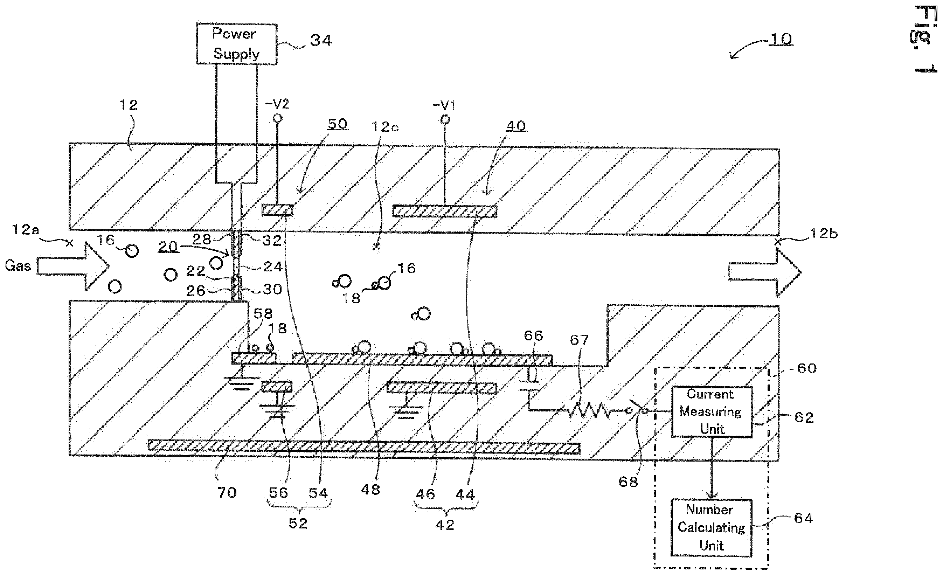

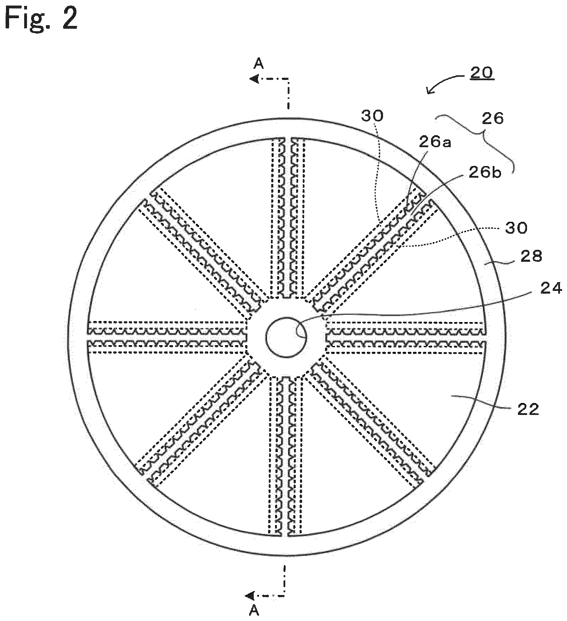

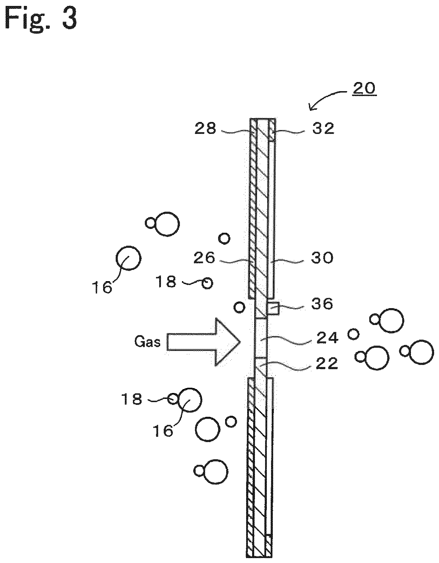

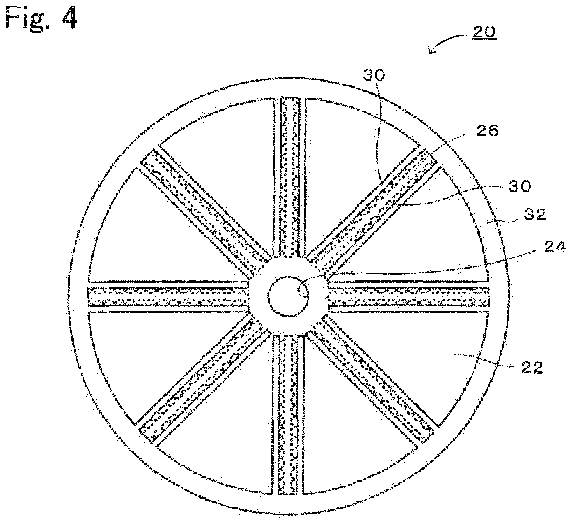

Preferred embodiments of the present invention will be described with reference to the drawings. Fig. 1 is a schematic sectional view of a particle counter 10, Fig. 2 is a plan view of an electric-charge generating element 20, Fig. 3 is a sectional view taken along line A-A of Fig. 2, and Fig. 4 is a rear view of the electric-charge generating element 20.

The particle counter 10 measures the number of particles included in a gas (for example, exhaust gas of an automobile). As illustrated in Fig. 1, the particle counter 10 includes a gas flow pipe 12 made of a ceramic; and the electric-charge generating element 20, a collection device 40, an excess-electric-charge removing device 50, a counting device 60, and a heater 70, which are disposed in the gas flow pipe 12. The gas flow pipe 12 has a gas inlet 12a, through which a gas is introduced into the gas flow pipe 12, and a gas outlet 12b, through which the gas that has passed through the gas flow pipe 12 flows to the outside.

The electric-charge generating element 20 adds electric charges 18 to particles 16 in the gas introduced into the gas flow pipe 12. As illustrated in Figs. 1 to 4, the electric-charge generating element 20 includes a dielectric layer 22, discharge electrodes 26, ground electrodes 30, and a power supply 34.

The dielectric layer 22 is made of, for example, mica or a ceramic, and is disposed so as to block the passage in the gas flow pipe 12. In other words, the dielectric layer 22 is disposed so as to impede the flow of the gas. A through-hole is formed at the center of the dielectric layer 22, and the through-hole functions as a nozzle 24. The nozzle 24 is disposed at a position such that the nozzle 24 does not interfere with the discharge electrodes 26 and the ground electrodes 30. The dielectric layer 22 has an ultrasonic vibrator 36 near the nozzle 24.

As illustrated in Fig. 2, each of the discharge electrodes 26 is rectangular and has a plurality of protrusions 26a on long sides thereof that face each other. A part of the discharge electrode 26 excluding the protrusions 26a will be referred to as a base line 26b. A plurality of (in Fig. 2, eight) discharge electrodes 26 are arranged, in a radial pattern centered on the nozzle 24, on a surface of the dielectric layer 22 on the upstream side in the gas flow direction. All of the discharge electrodes 26 are connected to a ring-shaped discharge electrode terminal 28, which is disposed at the outer periphery of the dielectric layer 22.

As illustrated in Fig. 4, each of the ground electrodes 30 is a rectangular electrode; and a plurality of (in Fig. 2, sixteen) ground electrodes 30 are arranged, in a radial pattern centered on the nozzle 24, on a surface of the dielectric layer 22 on the downstream side in the gas flow direction. All of the ground electrodes 30 are connected to a ring-shaped ground electrode terminal 32, which is disposed at the outer periphery of the dielectric layer 22. Two ground electrodes 30 and one discharge electrode 26 form a pair. When the dielectric layer 22 is seen through the surface thereof on the downstream side in the gas flow direction, one ground electrode 30 is disposed on each of two sides of one discharge electrode 26. To be specific, two ground electrodes 30 that form a pair with one discharge electrode 26 do not overlap, a long side of one of the ground electrodes 30 faces one long side of the discharge electrode 26, and a long side of the other of the ground electrodes 30 faces the other long side of the discharge electrode 26.

The power supply 34 is connected to the discharge electrode terminal 28 and the ground electrode terminal 32, grounds the ground electrode terminal 32, and can apply a high voltage (negative voltage) to the discharge electrode terminal 28. When a high voltage is applied to the discharge electrode terminal 28, gaseous discharge (such as corona discharge, dielectric barrier discharge, or both of corona discharge and dielectric barrier discharge) occurs due to the potential difference between the discharge electrodes 26 and the ground electrodes 30. When gaseous discharge occurs, on the surface of the dielectric layer 22 on which the discharge electrodes 26 are disposed, electric charges 18 (here, electrons) are added to the particles 16 in the gas introduced from the gas inlet 12a. The particles 16 to which the electric charges 18 have been added move together with the flow of the gas from the nozzle 24 to a hollow portion 12c in the gas flow pipe 12.

The collection device 40, which is a device for collecting the particles 16 to which the electric charges 18 have been added, is disposed at the hollow portion 12c in the gas flow pipe 12. The collection device 40 includes an electric field generator 42 and a collection electrode 48. The electric field generator 42 has a negative electrode 44, which is embedded in a wall of the hollow portion 12c, and a positive electrode 46, which is embedded in a wall that faces the negative electrode 44. The collection electrode 48 is exposed on the wall of the hollow portion 12c in which the positive electrode 46 is embedded. A negative potential -V1 is applied to the negative electrode 44 of the electric field generator 42, and a ground potential Vss is applied to the positive electrode 46. The level of the negative potential -V1 is in the range of -millivolt order to - several tens of volts. Thus, an electric field from the positive electrode 46 toward the negative electrode 44 is generated in the hollow portion 12c. Accordingly, the particles 16 that have entered the hollow portion 12c (and to which the electric charges 18 have been added) are attracted toward the positive electrode 46 due to the electric field and are collected by the collection electrode 48, which is placed on the way.

The excess-electric-charge removing device 50, which is a device for removing electric charges 18 that have not been added to the particles 16, is disposed at a part of the hollow portion 12c in front of the collection device 40 (on the upstream side in the gas flow direction). The excess-electric-charge removing device 50 has an electric field generator 52 and a removal electrode 58. The electric field generator 52 has a negative electrode 54, which is embedded in a wall of the hollow portion 12c, and a positive electrode 56, which is embedded in a wall that faces the negative electrode 54. The removal electrode 58 is exposed on the wall of the hollow portion 12c in which the positive electrode 56 is embedded. A negative potential -V2 is applied to the negative electrode 54 of the electric field generator 52, and the ground potential Vss is applied to the positive electrode 56. The level of the negative potential -V2 is in the range of -millivolt order to -several tens of volts. The absolute value of the negative potential -V2 is smaller than the absolute value of the negative potential - VI, which is applied to the negative electrode 44 of the collection device 40, by an order of magnitude or more. Thus, a weak electric field from the positive electrode 56 toward the negative electrode 54 is generated. Accordingly, some of the electric charges 18 that were generated by gaseous discharge in the electric-charge generating element 20 and that have not been added to the particles 16 are attracted toward the positive electrode 56 by the weak electric field and discarded to GND via the removal electrode 58, which is placed on the way.

The counting device 60 (detection device), which is a device for measuring the number of particles 16 based on the quantity of electric charges 18 of particles 16 that have been collected, includes a current measuring unit 62 and a number calculating unit 64. Between the current measuring unit 62 and the collection electrode 48, a capacitor 66, a resistor 67, and a switch 68 are connected in series from the collection electrode 48 side. Preferably, the switch 68 is a semiconductor switch. When the switch 68 is turned on and the collection electrode 48 and the current measuring unit 62 are electrically connected to each other, an electric current based on electric charges 18 that have been added to particles 16 that adhere to the collection electrode 48 flows through a serial circuit composed of the capacitor 66 and the resistor 67 and is transmitted to the current measuring unit 62 as a transient response. As the current measuring unit 62, an ordinary ammeter may be used. The number calculating unit 64 calculates the number of particles 16 based on the electric current value from the current measuring unit 62.

The heater 70 is embedded in the wall of the hollow portion 12c on which the collection electrode 48 is disposed. When refreshing the collection electrode 48 by incinerating the particles 16 collected by the collection electrode 48, electric power is supplied from a power supply (not shown) to the heater 70. The heater 70 is utilized also when measuring the number of particles in a state in which influence of hydrocarbon polymers, which are called SOF (Soluble Organic Fraction), is eliminated.

Next, an example of use of the particle counter 10 will be described. When counting the number of particles included in exhaust gas of an automobile, the particle counter 10 is attached to the inside of an exhaust pipe of an engine. At this time, the particle counter 10 is attached so that the exhaust gas is introduced into the gas flow pipe 12 from the gas inlet 12a of the particle counter 10 and the exhaust gas flows to the outside from the gas outlet 12b.

Electric charges 18 (electrons) are added to particles 16, which are included in the exhaust gas introduced into the gas flow pipe 12 from the gas inlet 12a, on the discharge electrode 26 side of the electric-charge generating element 20. Then, the particles 16 pass through the nozzle 24 and enter the hollow portion 12c. The particles 16 to which the electric charges 18 have been added pass through the excess-electric-charge removing device 50, in which the electric field is weak and the removal electrode 58 has a small length that is 1/20 to 1/10 of the length of the hollow portion 12c, without being affected, and reach the collection device 40. Electric charges 18 that have not been added to the particles 16 also pass through the nozzle 24 and enter the hollow portion 12c. Even through the electric field is weak, such electric charges 18 are attracted toward the positive electrode 56 of the excess-electric-charge removing device 50, and are discarded to the GND via the removal electrode 58, which is placed on the way. Thus, most of unnecessary electric charges 18 that have not been added to the particles 16 do not reach the collection device 40.

When the particles 16 to which the electric charges 18 have been added reach the collection device 40, the particles 16 are attracted toward the positive electrode 46 and collected by the collection electrode 48, which is placed on the way. An electric current based on the electric charges 18 that have been added to the particles 16 that adhere to the collection electrode 48 flows through the serial circuit composed of the capacitor 66 and the resistor 67 and is transmitted to the current measuring unit 62 of the counting device 60 as a transient response.

The relationship between the electric current I and the electric charge quantity q is I = dq/(dt), or q = ∫Idt. Accordingly, the number calculating unit 64 calculates the integral of electric current value (accumulated electric charge quantity) by integrating (accumulating) the electric current value from the current measuring unit 62 over a period during which the switch 68 is turned on (switch-on period). After the switch-on period has elapsed, the total number of electric charges (the number of collected electric charges) is calculated by dividing the accumulated electric charge quantity by a unit electric charge, and the number of collected electric charges is divided by the average value of the number of electric charges added to one particle 16; and thereby the number of particles 16 that have adhered to the collection electrode 48 over a certain period (for example, 5 to 15 seconds) can be calculated. Then, the number calculating unit 64 repeats the calculation of counting the number of particles 16 over a predetermined period (for example, 1 to 5 minutes) and accumulates the results. Thus, the number calculating unit 64 can calculate the number of particles 16 that have adhered to the collection electrode 48 over the predetermined period. Moreover, by utilizing the transient response due to the capacitor 66 and the resistor 67, even a small electric current can be measured, and the number of particles 16 can be detected with high accuracy. It is possible to measure a small electric current of a pA (picoampere) level or a nA (nanoampere) level by, for example, increasing the time constant by using a resistor 67 having high resistance. At appropriate timings, the collection electrode 48 is refreshed by supplying electric power to the heater 70 and incinerating the particles 16 collected by the collection electrode 48.

With the electric-charge generating element 20 according to the present embodiment described above in detail, because high-efficiency discharge using the dielectric layer 22 as a barrier layer is utilized, it is possible to generate the same quantity of electric charges with lower voltage and lower power consumption, compared with a needle-shaped electric-charge generating electrode. Moreover, the generated electric charges 18 and the particles 16 to which the electric charges 18 have been added are released from the upstream side toward the downstream side in the gas flow direction through the nozzle 24, which is incorporated in the dielectric layer 22. Therefore, a connection passage that connects a nozzle generating element and the nozzle does not exist, and the electric charges 18 or the particles 16 to which electric charges 18 have been added do not adhere to a wall surface of the connection passage. Accordingly, the electric charges 18 and the particles 16 to which the electric charges have been added can be efficiently released to the hollow portion 12c almost without loss.

Because the dielectric layer 22 has the nozzle 24 at the center of the dielectric layer 22, the electric charges 18 generated by the electric-charge generating element 20 and the particles 16 to which the electric charges 18 have been added can be easily released from the nozzle 24.

Moreover, because a plurality of electrode pairs, each composed of one the discharge electrode 26 and two ground electrodes 30, are arranged in a radial pattern, the quantity of generated electric charges can be increased, compared with a case where the number of electrode pair is only one.

Furthermore, because the dielectric layer 22 has the ultrasonic vibrator 36, by vibrating the dielectric layer 22 by using the ultrasonic vibrator 36, it is possible to prevent the electric charges 18 and the particles 16 to which the electric charges 18 have been added from adhering onto the dielectric layer 22, and it is possible to remove particles 16 that have adhered. Moreover, occurrence of blocking of the nozzle 24 can be prevented.

Needless to say, the present invention is not limited to the embodiment described above at all and can be carried out in various embodiments within the technical scope of the present invention.

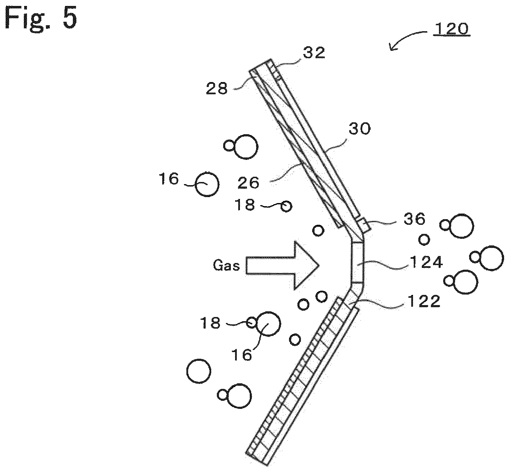

For example, in the embodiment described above, the electric-charge generating element 20, which includes the dielectric layer 22 having a flat plate-like shape, is shown as an example. However, as illustrated in Fig. 5, an electric-charge generating element 120 including a cone-shaped dielectric layer 122 may be used. Except that the shape of the dielectric layer 122 differs, the electric-charge generating element 120 is the same as the electric-charge generating element 20. Therefore, elements that are the same as those of the electric-charge generating element 20 will be denoted by the same numerals and descriptions of such elements will be omitted. In the electric-charge generating element 120, the vertex of the cone-shaped dielectric layer 122 is located on the downstream side in the gas flow direction. A circular cone shape and an elliptic cone shape are included in a cone shape. When the dielectric layer 122 has a cone shape, the outer shape of the dielectric layer 122 is a circle or an ellipse. A nozzle 124 is disposed at the vertex of the dielectric layer 122. The discharge electrodes 26 are disposed on the inner surface of the cone-shaped dielectric layer 122, and the ground electrodes 30 are disposed on the outer surface of the cone-shaped dielectric layer 122. In the electric-charge generating element 120, the electric charges 18 generated by the discharge electrodes 26 and the particles 16 to which the electric charges 18 have been added are smoothly guided toward the nozzle 124 by the cone-shaped dielectric layer 122. Therefore, the electric charges 18 and the particles 16 are efficiently released from the nozzle 24 to the hollow portion 12c. The dielectric layer 122 may have a pyramid shape. Polygonal pyramid shapes, such as a quadrangular pyramid shape, are included in a pyramid shape. However, a quadrangular pyramid shape is preferable. When the dielectric layer 122 has a pyramid shape, the outer shape of the dielectric layer 122 is a polygon.

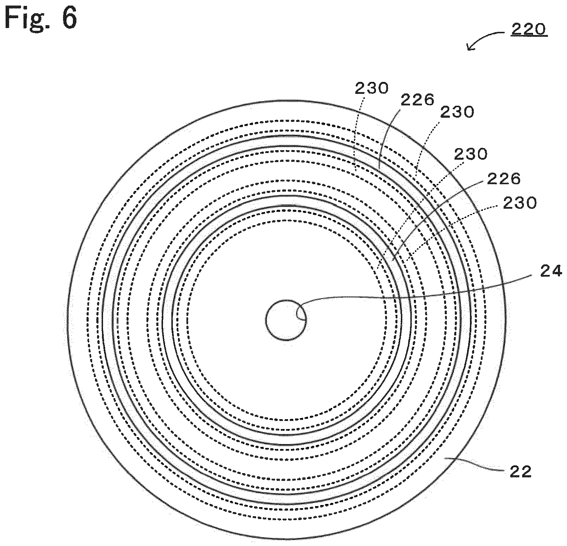

In the embodiment described above, the discharge electrodes 26 and the ground electrodes 30 are arranged in a radial pattern centered on the nozzle 24. However, as in an electric-charge generating element 220 illustrated in Fig. 6, discharge electrodes 226 and ground electrodes 230 may be arranged in an annular pattern centered on the nozzle 24. To be specific, the discharge electrodes 226 are arranged in an annular pattern, and the ground electrodes 230 are arranged in an annular pattern on the inner side and the outer side of each of the discharge electrodes 226. A plurality of electrode pairs, each of which is composed of one discharge electrode 226 and two ground electrodes 230, are arranged in an annular pattern. Therefore, compared with a case where the number of electrode pair is one, the quantity of generated electric charges can be increased. In Fig. 6, protrusions of the discharge electrodes 226 are omitted. However, the discharge electrodes 226 may have protrusions similar to those of the discharge electrodes 26.

In the embodiment described above, the number of particles 16 to which the electric charges 18 have been added is measured. However, the number of particles 16 to which the electric charges 18 have been added may be calculated by subtracting the number of the electric charges 18 that have not been added to particles 16 from the total number of generated electric charges 18 (see, for example, the third embodiment described in PTL 1). To be specific, first, by using a gas in which almost no particles 16 are present, the number (N1) of electric charges 18 that are generated by the electric-charge generating element 20 is measured. Next, by using a gas including particles 16, the number (N2) of electric charges 18 that have been generated by the electric-charge generating element 20 and that have not been added to the particles 16 is measured. The number (N3) of electric charges 18 that have been generated by the electric-charge generating element 20 and that have been added to the particles 16 can be calculated as N3 = N1 - N2. The quotient (N) of N3 divided by the average value NA of the number of electric charges added to one particle 16 is substantially equal to the number of particles 16, and can be calculated as N = N3/NA. Also with this method, it is possible to measure the number of particles included in the gas.

In the embodiment described above, the electric charges 18 generated by the discharge electrodes 26 of the electric-charge generating element 20 are added to the particles 16 included in the gas, and the particles 16 to which the electric charges 18 have been added are released from the nozzle 24. However, this structure is not particularly a limitation. For example, a mixing region may be disposed in front of the hollow portion 12c (on the upstream side in the gas flow direction) in the gas flow pipe 12, the electric-charge generating element 20 may be disposed in front of the mixing region, and exhaust gas of an automobile including particles may be directly introduced into the mixing region without passing through the electric-charge generating element 20. In this case, the electric-charge generating element 20 generates electric charges (ions) by ionizing air, which is suppled form the upstream side, and releases the electric charges from the nozzle 24 into the mixing region. The exhaust gas, including particles, is introduced into the mixing region. In the mixing region, the electric charges are added to particles in the exhaust gas. The particles to which the electric charges have been added in this way are introduced into the hollow portion 12c from the mixing region. Subsequently, in the same way as in the embodiment described above, the number of the particles to which the electric charges have been added is measured.

In the embodiment described above, the ultrasonic vibrator 36 is disposed near the nozzle 24. However, the ultrasonic vibrator 36 may be disposed at a position away from the nozzle 24, or may be disposed is a region that is on the dielectric layer 22 and in which the ground electrodes 30 and the discharge electrodes 26 are not present. The dielectric layer 22 need not have, but preferably has the ultrasonic vibrator 36.

In the embodiment described above, the discharge electrodes 26 have the protrusions 26a. However, the protrusions 26a may be omitted. In the embodiment described above, the excess-electric-charge removing device 50 is provided. However, the excess-electric-charge removing device 50 may be omitted.

In the embodiment described above, the outer shape of the electric-charge generating element 20 (the outer shape of the dielectric layer 22) is a disk-like shape. However, the outer shape is not particular limited to a disk-like shape and may be any shape that matches the cross-sectional shape of the gas flow pipe. In this case, because the electric-charge generating element 20 can be hermetically attached to the inside of the gas flow pipe 12, leakage of electric charges from a gap between the gas flow pipe 12 and the electric-charge generating element 20 can be prevented. For example, if the cross-sectional shape of the gas flow pipe is a quadrangle, the outer shape of the electric-charge generating element 20 may also be a quadrangle. The same applies to the electric-charge generating element 120.

In the embodiment described above, the particle counter 10, which measures the number of particles in a gas, is described as an example. However, instead of measuring the number of particles in a gas, whether the number of particles is within a predetermined range (for example, whether the number of particles exceeds a predetermined threshold) may be determined.

In the embodiment described above, the discharge electrodes 26 are disposed on one surface of the dielectric layer 22, and the ground electrodes 30 are disposed on the other surface of the dielectric layer 22. However, this is not particularly a limitation. For example, the ground electrodes 30 may be embedded in the dielectric layer 22.

In the embodiment described above, the opening shape of the nozzle 24 is a circle. However, the opening shape may be a polygon or an ellipse. The same applies to the nozzle 124 of the electric-charge generating element 120.

### EXAMPLES

### [EXAMPLE 1]

By grinding a 96% alumina sintered body having a cylindrical shape with an outside diameter of 28 mm, an inside diameter of 5 mm, and a height of 14 mm, an alumina sintered body having a cone shape (frustum shape) having a bottom surface with an outside diameter of 28 mm and an inside diameter of 27 mm, an upper surface with an outside diameter of 6 mm and an inside diameter of 5 mm, and a height of 14 mm was produced. In the present example, this alumina sintered body was used as a dielectric layer substrate. A cone-shaped alumina sintered body may also be produced by using a gel cast method in which ceramic slurry is poured into a die and molded.

Next, an application device including an inkjet head at an end of a robot arm was prepared. The dielectric layer substrate was supported on a stage. The inkjet head, including nozzles, can be moved in any direction by using the robot arm; and the cone-shaped dielectric substrate can be moved in any direction by using the stage.

Platinum paste was injected into the inkjet head, platinum paste was applied to the inner side of the cone-shaped dielectric layer substrate as discharge electrodes, and platinum paste was applied to the outer side of the cone-shaped dielectric layer substrate as ground electrodes. By applying the platinum paste while moving the head and the stage so that a region on the dielectric layer substrate to which the platinum paste is to be applied and the nozzle of the inkjet head become close to each other, discharge electrodes and ground electrodes having high application accuracy were formed. Note that it is possible to form any discharge electrode pattern by changing the application pattern of the application device. Ease of application of platinum paste was increased by reducing the particle diameter of platinum powder so that the particle diameter becomes smaller than the nozzle diameter of the inkjet head to prevent blocking of nozzle holes and by making the organic solvent content higher than that of platinum paste used in Comparative Example 1 (described below) to reduce viscosity. The dielectric layer substrate to which the platinum paste had been applied was fired, thereby obtaining an electric-charge generating element in which discharge electrodes, ground electrodes, a dielectric layer, and a nozzle were integrated. The length of each of the discharge electrodes was 15 mm, the width of each of the discharge electrodes (excluding protrusions) was 0.12 mm, the shape of each of protrusions was a triangle, the number of the protrusions was 38, and the pitch of the protrusions was 0.3 mm.

Subsequently, by drilling the dielectric layer substrate, through-holes for drawing out cables were formed. Lastly, in order to apply a discharge voltage to the electric-charge generating element, cables were connected to electrode pads of the discharge electrodes and the ground electrodes of the electric-charge generating element. The cables connected to the discharge electrodes were passed through the through-holes.

### [EXAMPLE 2]

In the same way as in Example 1, a cone-shaped alumina sintered body was produced, and, by dividing the cone-shaped alumina sintered body into two in the vertical direction, two halved members were produced. In Example 2, the two halved members were used as dielectric layer substrates. Halved members may also be produced by using a gel cast method in which ceramic slurry is poured into a die and molded. By drilling the halved members, through-holes for drawing out cables were formed.

A SUS316 sheet having a thickness of 20 µm was laser-beam machined, and discolored portions due to heat and burrs were removed by chemical polishing, thereby producing discharge electrodes and ground electrodes. The length and the width of each of the discharge electrodes (excluding protrusions), the shape of each of the protrusions, the number of the protrusions, and the pitch of the protrusions were the same as those of Example 1.

By using glass paste, the discharge electrodes thus obtained were affixed to the inner side of each of the two halved members and the ground electrodes were affixed to the outer side of each of the two halved members, and then joined by fusing. The two halved members thus produced were affixed to each other by using glass paste described above and fused, thereby obtaining an electric-charge generating element in which the discharge electrodes, the ground electrodes, the dielectric layer, and the nozzle were integrated.

Lastly, in order to apply a discharge voltage to the electric-charge generating element, cables were connected to the electrode pads of the discharge electrodes and the ground electrodes of the electric-charge generating element. The cables connected to the discharge electrodes were passed through the through-holes.

### [Comparative Example 1]

In the same way as in Example 1, a cone-shaped alumina sintered body was produced. In the present Comparative Example, the alumina sintered body was used as a casing. Next, by using ceramic slurry containing alumina powder, a sheet was formed by using a doctor-blade method so that the thickness of the sheet became 0.5 mm after being sintered, and, after firing, by cutting the sheet so as to have a width of 16 mm and a depth of 7 mm, a dielectric layer substrate of an electric-charge generating element was produced. Discharge electrodes were formed by screen printing platinum paste on one surface of the dielectric layer substrate, and ground electrodes were formed by screen printing platinum paste on the other surface of the dielectric layer substrate. Subsequently, by firing the dielectric layer substrate on which both electrodes had been formed, an electric-charge generating element was obtained. The length and the width (excluding protrusions) of each of the discharge electrodes, the shape of each of the protrusions, the number of the protrusions, and the pitch of the protrusions were the same as those of Example 1. The electric-charge generating element was fixed in the cone-shaped alumina sintered body. In order to apply a discharge voltage to the electric-charge generating element, cables were connected to electrode pads of the discharge electrodes and the ground electrodes of the electric-charge generating element. Moreover, through-holes were formed by drilling the casing, and the cables connected to the discharge electrodes were passed through the through-holes.

### [Evaluation of Electric-charge Generating Element]

An evaluation test was performed on each of the electric-charge generating elements produced in Example 1, Example 2, and Comparative Example 1. As the evaluation method, the ion density when a pulse wave having a voltage of 3000 V, an offset voltage of 1500 V, a pulse width of 50 µsec, and a period of 1 msec was applied to the electric-charge generating element was measured. The pulse wave was generated by using a function generator (made by Tektronix, Inc.), and the pulse wave was amplified to have a high voltage by using a high voltage amplifier (made by Trek, Inc.). The pulse wave was applied to the electric-charge generating element, and the density of ions generated from the electric-charge generating element was measured while suctioning the ions by using an air ion counter (made by Taiei Electric Engineering). The suction speed was 1.5 liters/minute.

For the electric-charge generating element of Example 1, the cables were connected to the output cables of the high voltage amplifier, and then the aforementioned pulse wave was applied. In this case, the ion density was 7.6×10⁶ pieces/cc.

For the electric-charge generating element of Example 2, the cables were connected to the output cables of the high voltage amplifier, and then the aforementioned pulse wave was applied. In this case, the ion density was 7.8×10⁶ pieces/cc.

For a device in which the electric-charge generating element produced in Comparative Example 1 was incorporated in the casing (cone-shaped alumina sintered body), the cables were connected to the output cables of the high voltage amplifier, and then the aforementioned pulse wave was applied. In this case, the ion density was 5.8×10⁶ pieces/cc.

Thus, in Example 1 and Example 2, the ion density was larger than that of Comparative Example 1 by 1.8×10⁶ pieces/cc to 2×10⁶ pieces/cc. Therefore, it was found that the electric-charge generating elements in Example 1 and Example 2 can reduce electric charges that adhere to the inner wall of the passage and can effectively release electric charges to the collection device.

The present application claims priority from Japanese Patent Application No. 2016-111718, file on June 3, 2016, the entire contents of which are incorporated herein by reference.

Needless to say, Examples described above do not limit the present invention at all.

### Industrial Applicability

An electric-charge generating element according to the present invention can be utilized, for example, in a particle counter and the like.

### Reference Signs List

10 particle counter, 12 gas flow pipe, 12a gas inlet, 12b gas outlet, 12c hollow portion, 16 particle, 18 electric charge, 20 electric-charge generating element, 22 dielectric layer, 24 nozzle, 26 discharge electrode, 26a protrusion, 26b base line, 28 discharge electrode terminal, 30 ground electrode, 32 ground electrode terminal, 34 power supply, 36 ultrasonic vibrator, 40 collection device, 42 electric field generator, 44 negative electrode, 46 positive electrode, 48 collection electrode, 50 excess-electric-charge removing device, 52 electric field generator, 54 negative electrode, 56 positive electrode, 58 removal electrode, 60 counting device, 62 current measuring unit, 64 number calculating unit, 66 capacitor, 67 resistor, 68 switch, 70 heater, 120 electric-charge generating element, 122 dielectric layer, 124 nozzle, 220 electric-charge generating element, 226 discharge electrode, 230 ground electrode

## Claims

1. An electric-charge generating element that generates electric charges by gaseous discharge, comprising:
a dielectric layer;
a discharge electrode disposed on one surface of the dielectric layer;
a ground electrode disposed on the other surface or inside of the dielectric layer; and
a nozzle that is disposed in the dielectric layer at a position such that the nozzle does not interfere with the discharge electrode and the ground electrode so as to penetrate through the dielectric layer.

2. The electric-charge generating element according to Claim 1,
wherein the electric-charge generating element adds the generated electric charges to particles included in a gas.

3. The electric-charge generating element according to Claim 1 or 2,
wherein the dielectric layer has the nozzle at a center of the dielectric layer.

4. The electric-charge generating element according to any one of Claims 1 to 3,
wherein an opening shape of the nozzle is a polygon, a circle, or an ellipse.

5. The electric-charge generating element according to any one of Claims 1 to 4,
wherein the dielectric layer has a cone shape, and wherein the nozzle is disposed at a vertex of the dielectric layer.

6. The electric-charge generating element according to any one of Claims 1 to 4,
wherein the dielectric layer has a pyramid shape, and wherein the nozzle is disposed at a vertex of the dielectric layer.

7. The electric-charge generating element according to Claim 5 or 6,
wherein the discharge electrode is disposed on an inner surface of the dielectric layer, and
wherein the ground electrode is disposed on an outer surface or inside of the dielectric layer.

8. The electric-charge generating element according to any one of Claims 1 to 7,
wherein the discharge electrode and the ground electrode are disposed so as to form a plurality of pairs and each are arranged in a radial pattern or an annular pattern centered on the nozzle.

9. The electric-charge generating element according to any one of Claims 1 to 8,
wherein the dielectric layer includes a vibration source that vibrates the dielectric layer.

10. A particle counter comprising:
the electric-charge generating element according to any one of Claims 1 to 9 that adds electric charges to particles in a gas introduced into a gas flow pipe; and
a detection device that detects the number of particles in the gas based on the quantity of electric charges of particles to which electric charges have been added or the quantity of electric charges that have not been added to particles.
